# EUROPEAN PATENT APPLICATION

(11) **EP 2 398 162 A1**
(43) Date of publication of application: **21.12.2011**
(21) Application number: 10166518.0
(22) Date of filing: 18.06.2010
(51) Int. Cl.: H04B 7/185

(54) **Application and implementation of providing mobile coverage for a moving convoy using satellite - BTS - to - BSC link**

(71) Applicant: Emirates Telecommunications Corporation, Abu-Dhabi (AE)
(72) Inventor: Bin Alwan, Ali Hamad Ali Nasser, ABU-DHABI (AE); Al Hammadi, Mohamed Ali Abdulla, ABU-DHABI (AE); Al Ali, Nasser Ali Sultan Obaid Abayed, ABU-DHABI (AE); Harmoodi, Ali Hassan Abdulla Hassan Al Qatan, DUBAI (AE); Al Suwaidi, Nasser Ahmed Sultan Humaid Mater, ABU-DHABI (AE); Philip, Jacob, DUBAI (AE); Al Marzooqi, Abu Baker Mohamed, ABU-DHABI (AE); Hameed, Mohammed Kunju, ABU DHABI (AE)
(74) Representative: Robba, Pierpaolo

(57) **Abstract**

The system provides mobile communication service to a moving convoy using satellite -BTS- to- BSC link irrespective of the location. A Base Transceiver Station having coverage pattern moving with convoy is created. The BTS establishes radio link between the mobile station and Base Station Controller at the home location through the satellite link. The idea is implemented by combining satellite communication and GSM technology. This is achieved by designing a transportable system with necessary communication equipments. The system mainly consists of an all terrain vehicle fitted with a micro Base Transceiver Station (BTS), GSM transmitting antenna on a quick deployable mast and satellite transmit /receive terminal and a sophisticated antenna that tracks and locks to the satellite under all pitching, rolling and yawing conditions. This provides unfaltering contact through satellite to the distant end user whenever he is in the foot print of the satellite.

## Description

### Prior Art

Mobile communication service is provided all over the world by Global System for Mobile Communication (GSM). This service allows both speech and data to be communicated across the inter connected network. This is made possible through a chain of Base Transceiver Station (BTS) and a Base Station Controller (BSC). The BTS consists of communication equipment for providing wireless communication between customer handset (Mobile Station) and the GSM network. BTS is normally having a huge tower mounted with communication antenna and associated transmit /receive equipments in an enclosure. Each BTS covers certain fixed cell area only. In order to have wide coverage, the number of BTS has to be increased. It is not economical to provide more BTS to cover the entire area; hence coverage is designed only for more populated area. When the customer is in the vicinity of this coverage area communication is possible. The signal transmitted by the handset (mobile station) is picked up by the BTS and transmitted back to the GSM network, so as to reach the desired customer at the distant end. Similarly the signal transmitted back from the BTS is received by the handset and the communication link with the distant customer is established.

When a subscriber is in need of mobile communication out side this coverage area, the existing system fails to provide communication. Then the only way to provide communication under this condition is either to move the BTS along with the traveller or establish more BTS or roaming arrangement with other operators. In this set up BTS moving is not possible due to its fixed nature; moreover all the associated communication equipments are normally operated in a fixed location under protected environment. Commercial power is used to operate this equipment. So in this prior art BTS cannot move from its fixed position and the mobile coverage is limited to certain specified (cell coverage) area only.

### Problem and defect in the prior art

BTS (Base Transceiver Station) is operated in fixed location and is not movable in the conventional system. Hence the basic problem is the coverage limited to, fixed defined cell area only. To provide uninterrupted communication, large network of BTS are required all over the area to be covered which is economically not viable. If the customer is not in its connected coverage area, communication using GSM becomes impossible. So the main defect of the current system is that if the mobile station (MS) is moved out of the coverage area of BTS, communication is totally lost; in other words Base Transceiver Station cannot follow the customer to provide the required coverage and roaming is possible only with support of various operators across the globe.

### Disclosure of the invention

The existing Global System Mobile communication provides the means of communication to people on the move locally and internationally by way of roaming arrangement with different mobile operators across the globe. Coverage is also limited with the individual operator.

In the new invention, mobile communication is provided to the subscriber through the same domestic operator either from local or international destinations. No roaming arrangement is required with any other operator. The convoy moving to various locations can access their domestic network by using this system even if there is no coverage by the local GSM. Here the BTS and the traveller are moving simultaneously and linked to its parent BSC; irrespective of the location and communication is always made possible.

### Brief Description of the Drawings

Figure 1: Provision of mobile coverage for a moving convoy using satellite - BTS- to BSC- link basic block diagram.
Figure 2: Equipment arrangement in the limited rack space.
Figure 3: Power supply system circuitry.
Figure 4: Physical location of battery bank and inverters in the vehicle.
Figure 5: Power switching arrangement.

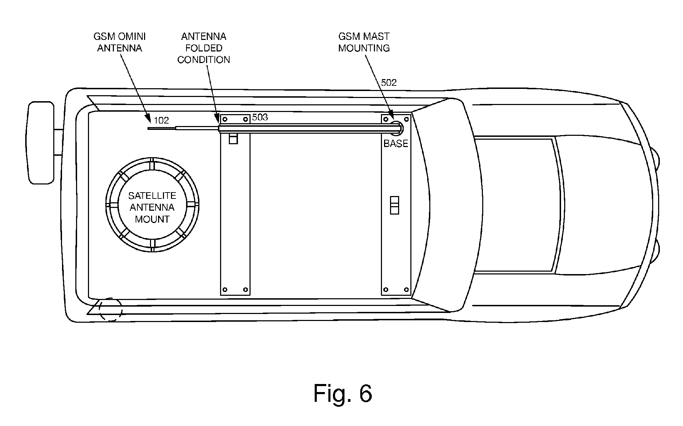

Figure 6: GSM antenna with mount stowed and secured.

### Detailed Description of the invention

Global System Mobile communication (GSM) is used across the globe as the means of communication to people on the move. Roaming arrangement is made globally with other operators to provide communication to the customers who are out of their domestic network. This is also limited to a predefined territory decided by the particular mobile operator. Communication is lost when the subscriber is out of that particular territory. To make it more clear, GSM service is provided all over the world, from fixed Base Transceiver Stations (BTS). These are controlled by Base Station Controllers (BSC). Each BTS covers only predefined fixed location. Handover between BTS is carried out when the customer moves out from one location to other. This is because of the limited cell coverage. But if there is no BTS cell coverage, communication is lost practically.

The new invention provides an effective solution for the above problem and communication is made possible while moving anywhere. The idea is conceived for providing mobile communication solution for the convoy moving to various destinations. The convoy is always linked to their domestic network operator through a satellite -BTS- to- BSC link. This idea can be utilized to meet the requirement of any potential customer. The technique adopted for providing mobile coverage is based on our expertise in satellite communication and GSM applications. It is decided to combine these technologies together to provide a viable solution on the move. The basic idea is to provide uninterrupted coverage, creating a coverage pattern using a single BTS which is moving with the traveller. This BTS is always linked through satellite to the assigned BSC at the home destination.

By incorporating the technology of satellite communication, GSM Technology and technique of satellite tracking, achieved a practical solution to implement the above idea successfully.

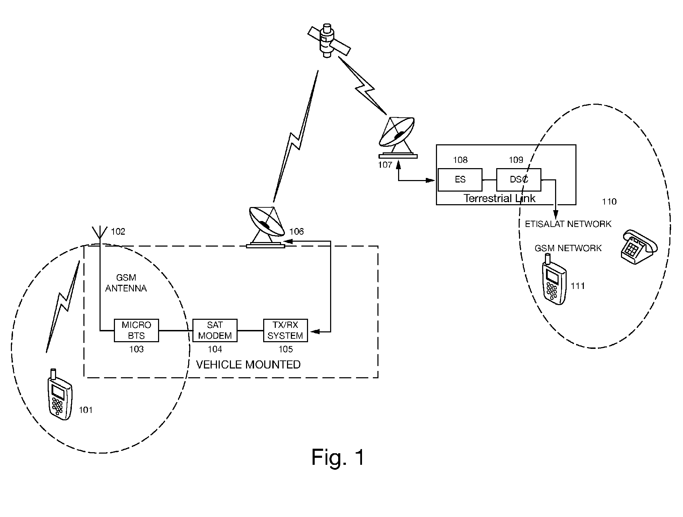

The mobile coverage is provided to the customer irrespective of his location. The system is capable of transmitting voice/data to the public network through satellite -BTS-to- BSC link. In order to create a moving coverage pattern to follow the convoy, a moving BTS with the traveller is designed in a transportable vehicle. A 4-wheel drive vehicle is selected for implementing the design so that it can move easily in any uneven terrain. The basic principle of implementing mobile coverage moving with convoy is shown in Figure 1.

The BTS is housing the radio transceivers which transmits and receives signals on the allocated frequencies. This in-turn communicates with its BSC at the home location through the satellite link as shown in Figure 1. The BSC Manages the radio resource of the BTS and also the connection between the mobile station (MS) and the external network subsystem. The BSC is interconnected to the mobile switching centre (MSC). It acts as the normal switching node for the mobile or land line telephone in the home network. The detailed description of the schematic in Figure 1 is provided in the subsequent section. All the communication equipment necessary to achieve the service is optimally designed in the limited available space of the selected 4-wheel drive vehicle.

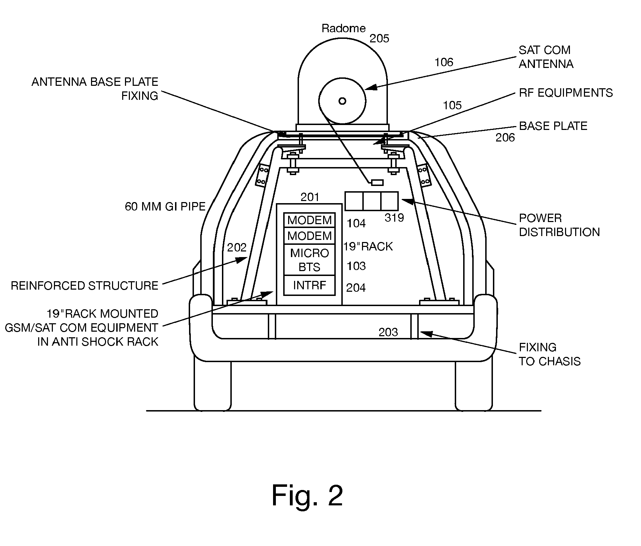

The signal transmitted from the mobile station (MS) 101, that is from the subscriber handset is picked up by the GSM Omini antenna 102 as shown in Figure 1. The signal is processed by the Micro BTS 103 which is passed to the satellite modem 104. The modem output , the intermediate frequency (IF) signal is up converted and amplified by block up converter inside the TX System 105 to the desired satellite communication frequency band and transmitted through the satellite communication antenna106 inside the radome 205 shown in Figure 2. This antenna automatically tracks and locks to the specified satellite and maintains the communication link. The signal is received at the distant earth station 107, fed to earth station receive system108, where it is down converted and demodulated to the desired base band frequency This base band signal is transmitted to its Base Station Controller (BSC) 109. There the signal is processed and switched to the public network 110, and routed to the designated subscriber 111.

To receive a signal from the distant end the reverse process takes place. The signal is received from the BSC at the earth station is transmitted back to the transportable vehicle through the satellite. The signal is received and frequency translated to the desired band by the LNB in RX path 105 placed below the antenna base plate 206 shown in Figure 2. The IF signal thus received is demodulated by the satellite modem 104 and processed by the Micro BTS 103.

Omni Antenna 102 radiates this signal from the BTS. If the traveller is within the vicinity of the BTS coverage range, the signal will be picked up by the mobile station 101. Thus a two way communication is established. The idea is successfully tested.

As shown in the Figure 2, the Micro BTS is mounted in an anti shock rack housed in a 4-wheel drive. Instead of the Fixed GSM mast on the shore, a rapidly deployable mast is mounted on top of the vehicle as shown in Figure 2. The Omini antenna mounted over the GSM mast will create the radiation pattern so that the signal can be transmitted/Received by the Mobile handset 101 within the coverage range. So any mobile station with in this range can access the BTS. Since the BTS is mounted in the vehicle and is moving: the coverage pattern also moving along with the traveller. However the traveller has the freedom to move away from the vehicle and can communicate from anywhere within the coverage area.

The overall system idea is briefed as follows. The internal space of the 4-wheel drive is redesigned to accommodate all mobile communication equipment and satellite communication equipments inside the vehicle as shown in Figure 2. Anti shock 19 inch rack 201 is bolted to the chassis. 60 mm GI pipe is used to reinforce structure 202 to bear the antenna load while moving. The entire structure is fixed on a base plate and attached to the vehicle main frame203. Interface panel 204 is provided to terminate all input output signals to the system. Micro BTS 103 is placed inside the rack201 over a perforated sheet for ventilation and heat transfer. The signal from Micro BTS 103 is interconnected to satellite modem 104, in order to maintain the link integrity and performance an automatic EIRP control is incorporated in transmit path either side of the link. This ensures constant Eb/No at the receiver on both ends, enhancing link stability irrespective of footprint regression and weather condition. Main and standby modems are provided in the rack. Internally generated AC power is made available in the power distribution panel 319 for equipment operation.

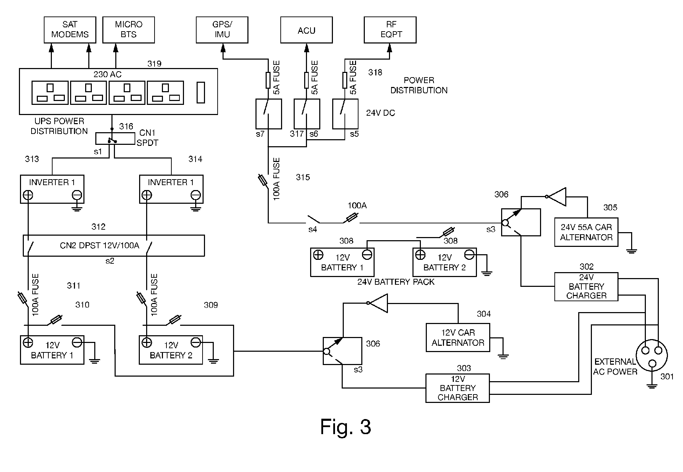

The power required for the smooth operation of the system is required to be generated internally. Since it is operating on a moving vehicle, wired connection from external source is not possible. On board equipment needs AC and DC power of various voltages and power rating. This is met internally by designing a suitable power supply. To operate satellite modem and micro BTS requires 230 V AC power. RF system (BUC and LNB), antenna control unit and GPS operate on 24 V DC. As shown in Figure 3, provision is also made to operate system from external source when it is not in motion. Selection is done by a switch. 230Volt AC power is generated using 12 V car alternators and fed to inverters.

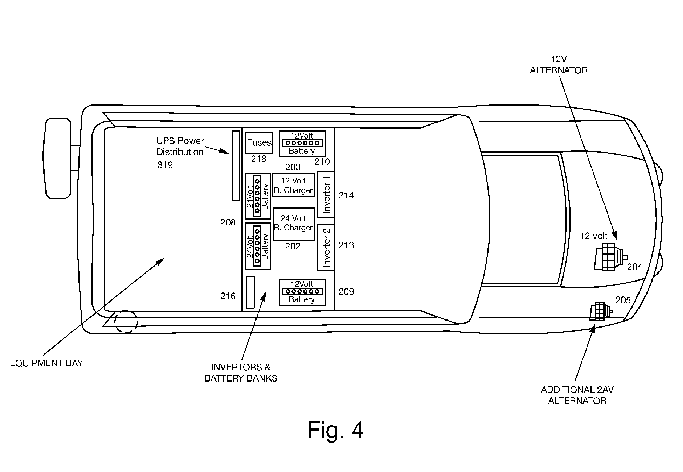

Figure 3 shows the circuit idea of the power supply design and Figure 4 shows the exact location of power system components. Design details included in a separate article.

Effective cooling arrangement is essential for the proper functioning of all communication equipment inside the vehicle. Built in vehicle AC system is effectively utilized for cooling equipments by proper planning of equipment layout.

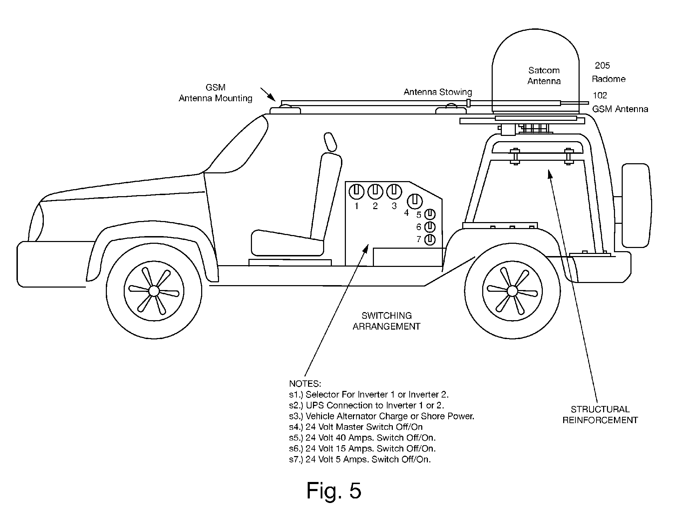

The mobile communication antenna is mounted on a rapidly deployable mast. Mast mounting arrangement is made in such a way to hold the Mast in vertical position with minimal vibration during movement and also provision is made for rapid deployment as required. Figure 5 shows the power switching arrangement for various communication equipments in the vehicle. To resist the ingress of dust and rain water to the equipment a transparent plastic adhesive type protection hanger is incorporated in the design.

### How to use the invention

This is a self contained communication solution for providing mobile connectivity irrespective of conventional GSM Coverage, extremely useful for convoy moving to different destinations with out depending on any local mobile operator for their immediate use. This compliments the absence of GSM coverage and provides instant communication facility to any motorable locations using the cell coverage area of the BTS on the vehicle. Provision of mobile coverage for the moving convoy is achieved using satellite- BTS- to- BSC link. This is highly useful to provide communication to the desired destination with the same domestic operator. This provides the roaming facility with out any other service provider. Since all the communication equipments are accommodated compactly in a transportable vehicle, it can be easily transported anywhere to establish communication link.

The invention can be widely used in emergency situation for disaster recovery operations. A traveller on the move can have his communication intact irrespective of the location. Expedition teams can make use of this to communicate from uneven terrain and can even adapt as communication solution in critical fronts.

## Claims

1. The application and implementation of providing mobile coverage for moving convoy using satellite- BTS- to- BSC link, this being achieved by moving Base Transceiver Station (BTS) along with the convoy, whereby in conventional system, BTS always remain in a fixed location, while here mobility of the BTS is also achieved.

2. The implementation of the mobile coverage for moving convoy as claimed in claim 1, wherein it is achieved with the same domestic mobile operator irrespective of the geo-graphical location, the traveller being even allowed to move out of the vehicle and continue his conversation.

3. The implementation of the Mobile coverage for moving convoy as claimed in claim 1, wherein it comprises a 4-wheel drive vehicle, equipment rack with micro BTS, satellite communication modem and interface panel for internal and external connection, capable of operating in uneven terrain with mobile communication equipment on board.

4. The implementation of the mobile coverage for moving convoy as claimed in claim 3, wherein the vehicle is modified to accommodate an equipment rack with operational convenience.

5. The implementation of the mobile coverage for moving convoy as claimed in claim 3, wherein the vehicle is strengthened by additional support structure with 6 mm steel rod to bear the load due to satellite antenna mount on top of the vehicle.

6. The implementation of the mobile coverage for moving convoy as claimed in claim 4, wherein the equipment rack is fixed on an additional 6 mm plate which is bolted to the vehicle chassis

7. The implementation of the mobile coverage for moving convoy as claimed in claim 3, wherein the cables from internal and external systems are routed and terminated on the interface panel.

8. The implementation of the Mobile coverage for moving convoy as claimed in claim 1, wherein the GSM omni antenna accepts transmit/receive signals of the mobile stations (handsets) with in the coverage area of the Micro BTS with in the specified area of the vehicle.

9. The implementation of the mobile coverage for moving convoy as claimed in claim 3, wherein the communication equipment is protected from the ingress of water and dust using a transparent plastic rain shade hanger.
